# EUROPÄISCHE PATENTSCHRIFT

(11) **EP 0 632 747 B1**
(45) Veröffentlichungstag und Bekanntmachung des Hinweises auf die Patenterteilung: **28.02.1996**
(21) Anmeldenummer: 93906540.5
(22) Anmeldetag: 18.03.1993
(51) Int. Cl.: B01J 23/44, B01J 37/02, C01B 3/40

(54) **SCHALENKATALYSATOR, SEIN HERSTELLUNGSVERFAHREN UND SEINE VERWENDUNG**
SHELL CATALYST, PROCESS FOR PRODUCING THE SAME AND ITS USE
CATALYSEUR EN COQUILLE, SON PROCEDE DE PRODUCTION ET SON UTILISATION

(30) Priorität: 26.03.1992 DE 4209832
(43) Veröffentlichungstag der Anmeldung: 11.01.1995
(73) Patentinhaber: Henkel Kommanditgesellschaft auf Aktien, D-40191 Düsseldorf (DE)
(72) Erfinder: SCHICK, Klaus-Peter, D-42781 Haan (DE); CARDUCK, Franz-Josef, D-42781 Haan (DE); GÖBEL, Gerd, D-50858 Köln (DE); ROLLBERG, Hans-Georg, D-40589 Düsseldorf (DE)
(86) Internationale Anmeldenummer: EP9300643
(87) Internationale Veröffentlichungsnummer: WO9318856

(56) Entgegenhaltungen:
- CA-A- 1 157 844
- DE-A- 2 705 340
- DE-B- 2 530 759
- US-A- 3 138 560

## Beschreibung

Die Erfindung betrifft einen Schalenkatalysator mit 0,3 bis 5, insbesondere 0,5 bis 2 Gew.-% Palladium auf einem Aktivkohleträger, bezogen auf den getrockneten Katalysator, erhältlich durch Imprägnieren des Trägers mit einer wäßrigen Palladiumsalzlösung, Ausfällen von Palladium und Reduktion, ein Verfahren zu dessen Herstellung sowie die Verwendung der Katalysatoren zur Härtung ungesättigter Fettstoffe.

### Stand der Technik

Die großtechnische Härtung von ungesättigten Fetten, Ölen und Fettsäuren durch Hydrieren wird mit Nickelkatalysatoren in Form von feinen Pulvern in intensiv gerührten Autoklaven unter Wasserstoffdrücken von bis zu 20 bar und Temperaturen von bis zu 250°C durchgeführt. Insbesondere beim Härten von Fettsäuren treten besondere Probleme auf. Zum einem bilden sich bei diesen Temperaturen Nickelseifen, die nur durch Destillation aus dem Produkt entfernt werden können. Außerdem nimmt durch das Herauslösen von Nickel aus dem Katalysator dessen Aktivität und damit seine Standzeit ab. Zum anderen ist die Trennung des Katalysators vom Produkt aufwendig und führt zu einem erhöhten Produktverlust.

Diese Nachteile lassen sich vermeiden, wenn man Palladiumkatalysatoren einsetzt. Palladium ist säureresistent. Es bilden sich daher keine Seifen, die abgetrennt werden müßten. Die Standzeit eines solchen Katalysators ist dann so hoch, daß eine wirtschaftlich vertretbare kontinuierliche Härtung im stationären Katalysatorbett möglich wird. Damit entfällt auch die aufwendige Abtrennung des Katalysators vom Produkt.

Ferner eignet sich ein solcher Katalysator auch hervorragend für die Härtung von Nahrungsmittelfettstoffen, da das gehärtete Produkt überhaupt keinen Restnickelgehalt aufweist.

Ein Katalysator der eingangs genannten Art ist aus dem kanadischen Patent **CA 1157844** bekannt. Wie dort ausführlich mit Zitaten aus der Patentliteratur beschrieben wird, besteht die Herstellung eines Edelmetallträgerkatalysators in der Regel aus den drei Schritten Imprägnierung, Fällung und Reduktion. So wird z. B. **GB-B-799871** zitiert, bei dem ein Trägermaterial PdCl₂-Lösung imprägniert und mit NaHCO₃ als Pd(OH)₂ gefällt wird.

Ähnliche Prozesse werden in **US 2749359**, **US 3736266** und **DE 2850510** beschrieben. Aus der **US 3138560** sind Katalysatoren zur Reinigung von Wasserstoff bzw. Sauerstoff bekannt, die man erhält, indem man einen basisch reagierenden Aktivkohleträger mit einer wäßrigen Palladiumsalzlösung in Gegenwart eines Oxidationsmittels imprägniert, wobei das Palladiumsalz ohne Zugabe eines weiteren Reduktionsmittels feinverteilt an der Oberfläche des Katalysators zum Metall reduziert und niedergeschlagen wird.

In **CA-B 1157844** wird zur Erhöhung der Aktivität des Palladiumkatalysators ein Katalysatorträger aus extrudierter Aktivkohle zuerst mit Wasser oder einer organischen Flüssigkeit vorbeladen, bevor die Imprägnierung mit der Palladiumsalzlösung erfolgt. Damit soll erreicht werden, daß das Edelmetall nur in einer äußeren Schale auf den Träger aufgebracht wird. Nach einer Imprägnierzeit von 1 Stunde wird der pH-Wert durch Zugabe von Natriumhydroxidlösung auf einen Wert von etwa 4,0 eingestellt, so daß Palladium als Hydroxid ausfällt. Die Herstellung des Katalysators wird durch Filtration, Waschen, Trocknen und Reduktion abgeschlossen.

Der Erfindung liegt die Aufgabe zugrunde, einen Katalysator der eingangs genannten Art mit einer erheblich höheren Aktivität und höheren Standzeit zu schaffen. Außerdem soll ein einfacheres und wirtschaftlicheres Verfahren zum Herstellen eines solchen Katalysators bereitgestellt werden.

### Beschreibung der Erfindung

Gegenstand der Erfindung sind Schalenkatalysatoren mit 0,3 bis 5 Gew.-% Palladium - bezogen auf den getrockneten Katalysator - auf einem alkalischen Aktivkohleträger, erhältlich durch Imprägnieren des Trägers mit einer wäßrigen Palladiumsalzlösung, Ausfällen von Palladium und Reduktion, die sich dadurch auszeichnen, daß man in Abwesenheit eines Oxidationsmittels trockene, alkalisch reagierende Aktivkohle mit einem pH-Wert von mindestens 8 mit der Palladiumsalzlösung imprägniert und die überstehende Flüssigkeit abtrennt, nachdem diese einen pH-Wert von mindestens 1 erreicht hat.

Überraschenderweise hat sich nämlich gezeigt, daß man besonders aktive Katalysatoren mit einer sehr hohen Standzeit erhält, wenn die in der Kohle enthaltene Basizität ausreicht, den pH-Wert der Edelmetallsalzlösung nach der Imprägnierung auf einen zur Fällung ausreichenden Mindest-pH-Wert zu erhöhen. In diesem Fall wird das gesamte in der Lösung enthaltene Palladium in einer Randzone des Trägers ausgefällt. Die überstehende Lösung ist palladiumfrei, so daß auf eine zusätzliche Zugabe einer Lauge, z. B. Natronlauge, zur Vervollständigung der Fällung verzichtet werden kann. Man erhält eine Schalenimprägnierung, wobei die Edelmetallkonzentration in einem Randbereich von etwa 0,2 mm fast auf 0 abfällt, wie oberflächenphysikalische Untersuchungen zeigten.

Ein weiterer Gegenstand der Erfindung betrifft ein Verfahren zur Herstellung eines Schalenkatalysators mit 0,3 bis 5 Gew.-% Palladium - bezogen auf den getrockneten Katalysator - auf einem alkalischen Aktivkohleträger, erhältlich durch Imprägnieren des Trägers mit einer wäßrigen Palladiumsalzlösung, Ausfällen von Palladium und Reduktion, das sich dadurch auszeichnet, daß man in Abwesenheit eines Oxidationsmittels trockene, alkalisch reagierende Aktivkohle mit einem pH-Wert von mindestens 8 mit der Palladiumsalzlösung imprägniert und die überstehende Flüssigkeit abtrennt, nachdem diese einen pH-Wert von mindestens 1 erreicht hat.

### Palladiumsalze

Als Palladiumsalz sind z. B. Alkalitetrahalogenopalladate, aber auch Palladiumchlorid, Palladiumnitrat oder andere Palladiumsalze einsetzbar.

### Vergleich mit dem nächstliegenden Stand der Technik

Die beim Hydrieren mit dem erfindungsgemäßen Katalysator erreichbaren Jodzahlen liegen deutlich niedriger als bei der Verwendung des in der canadischen Patentschrift **CA 1157844** beschriebenen Katalysators, wenn vergleichbare Hydrierbedingungen vorliegen. So wird nach Beispiel 10 dieser Patentschrift bei einem Flüssigkeitsdurchsatz pro Katalysatorvolumen und Zeit (LHSV) von nur 0,2 1/h (2,5 l Katalysator und 0,625 l/h Durchsalz von Palmkernöl) bei einem Druck von 25 bar nur eine Jodzahl von 1,7 erreicht. Mit dem erfindungsgemäßen Katalysator läßt sich Palmkernöl bei LHSV von etwa 1/h dagegen auf Jodzahlen unter 0,6 hydrieren.

Während der in **CA 1157844** beschriebene Katalysator beim Test mit destillierter Talgfettsäure nur bei sehr geringem Flüssigkeitsdurchsatz von 0,2 1/h Jodzahlen kleiner 1 erreicht und bei Steigerung der Belastung auf 0,6 1/h die Jodzahl schon auf 2,5 bis 3,3 steigt, ist es mit dem erfindungsgemäßen Katalysator möglich, bei Belastungen von 1/h eine Jodzahl von kleiner 0,5 und bei Belastungen von 2 bis 3/h immer noch deutlich kleiner ab 1 zu erreichen (Beispiel 5).

Der spezifische Paladiumverbrauch wird in **CA 1157844** mit 0,00089 % angegeben. Der entsprechende Wert aus Beispiel 5, nachdem mit 1 l Katalysator 2 429 kg Fettsäuren gehärtet wurden, wobei die Aktivität noch nicht merklich nachgelassen hat, beträgt 0,00041 % und liegt damit um 50 % unter dem Vergleichswert.

### Katalysatorherstellung

Besonders einfach und wirtschaftlich läßt sich der erfindungsgemäße Katalysator herstellen, wenn das Volumen der Salzlösung etwa gleich dem Gesamtporenvolumen der Aktivkohle ist. Das Imprägnieren kann dann durch ein Aufsprühen der Lösung auf den Aktivkohleträger durchgeführt werden.

Erfindungsgemäß ist eine Vorbeladung des Katalysators mit Flüssigkeit vor dem Imprägnieren nicht erforderlich. Daher wird die Aktivkohle bevorzugt in trockenem Zustand mit der Salzlösung in Kontakt gebracht. Trotzdem bildet sich wie im Beispiel 2 beschrieben auf diese Art und Weise eine ausgeprägte Schalenimprägnierung des Edelmetalls aus. Ferner wird vorgeschlagen, daß die Aktivkohle während der Zugabe der Lösung bewegt wird. Um einen halogenidarmen Katalysator zu erhalten, sollte ferner nach dem Impräg- nieren mit Palladiumhalogenidsalzen das erhaltene Produkt abfiltriert und mit Wasser gewaschen werden.

### Härtung ungesättigter Fettstoffe

Die Härtung wird vorzugsweise bei Temperaturen von 80 bis 250°C und Absolutdrücken von 0,5 bis 50 bar durchgeführt. Die Härtung kann wahlweise so durchgeführt werden, daß die Jodzahl nach der Reaktion möglichst niedrig ist, wie es in der Regel bei der Härtung von Fettsäuren für technische Anwendungen gefordert ist, aber auch bei der Härtung von Methylestern (Beispiel 8, 18) oder Neutralölen (Beispiel 15) wünschenswert sein kann. Diese Reaktionen werden in der Regel bei 20 bar Wasserstoffdruck durchgeführt. Es ist aber auch möglich hochjodzahlige Ausgangsstoffe unter definierten Bedingungen gezielt auf bestimmte Jodzahlen zu härten, um bestimmte anwendungstechnische Eigenschaften zu erzielen. Dabei müssen dann von den Normalbedingungen abweichende Parameter (Druck, Temperatur) eingestellt werden. Diese sogenannte partielle Härtung wird in Beispiel 12 für die Härtung von Rübölfettsäure und Beispiel 16 für die Härtung von Sonnenblumenöl und Rüböl beschrieben.

Insbesondere wird bei der Härtung von Fettsäuren vorgeschlagen, daß man destillierte Fettsäuren einsetzt, da deren Farbe bei der Härtung so stark verbessert wird, daß die für verkaufsfähige Produkte notwendige Farbe erreicht wird, ohne daß die sonst übliche Nachbehandlung durch Adsorption durchgeführt werden muß.

Ausführungsbeispiele und Versuchsergebnisse der Erfindung werden nachfolgend unter anderem anhand von Zeichnungen näher beschrieben. Es zeigen
(a) Figur 1 die Palladiumverteilung über der Schichtdicke eines erfindungsgemäßen Katalysators,
(b) Figur 2 die Ergebnisse eines Standzeitversuches in einem Diagramm, in dem die Restjodzahl, die Flüssigkeitsbelastung (LHSV), die Temperatur und die Säurezahl über dem Gesamtdurchsatz aufgetragen sind und
(c) Figur 3 ein Fließbild einer Pilotanlage für eine kontinuierliche Fettsäurehärtung.

### Beispiele

### Beispiel 1:

**Herstellung des Katalysators**. Eine Suspension von 3,342 g PdCl₂ in 160 ml Wasser wurde mit 2 ml HCl (konz) und 2,21 g NaCl versetzt und gerührt, bis sich eine klare Lösung ergab. Diese Lösung wurde bei Raumtemperatur unter Schütteln zu 100 g Aktivkohle (Cecarbon GAC 30, Siebfraktion größer als 1,4 mm) in einem 500 ml-Kolben gegeben. Die Aktivkohle hatte eine Oberfläche von 1 140 m²/g nach BET, ein Porenvolumen von 0,32 ml/g, gemessen mit Hg-Porosimetrie, pH von 8,3 (10 % in Wasser) und einen Glührückstand von 13,4 %. Die Lösung entfärbte sich spontan und der pH-Wert der überstehenden Lösung stieg von unter 1 auf etwa 3. Der Ansatz wurde 1 h stehengelassen, wobei der pH-Wert auf 4 bis 5 anstieg. Anschließend wurde die überstehende Lösung abfiltriert und mit 2 l Wasser annähernd chloridfrei gewaschen. Der Katalysator wurde trockengesaugt und über Nacht bei 120°C getrocknet. Ausbeute: 96,2 g (trocken).

### Beispiel 2:

**Herstellung des Katalysators**. In einem Pflugscharmischer wurden bei Raumtemperatur 1 680 g einer Lösung von Na₂PdCl₄ (Pd-Gehalt von 20 g) in einen laufenden Mischer zu 1 000 g des gleichen Aktivkohlegranulats Cecarbon GAC 30 wie in Beispiel 1 gegeben. Nach kurzer Standzeit wurde das Granulat mit wenig Wasser aus dem Mischer gespült und reagierte im Becherglas 1 h nach. Der Katalysator wurde zweimal mit jeweils 10 l Wasser chloridarm gewaschen, trockengesaugt und bei 120°C getrocknet. Ausbeute: 1051,5 g.

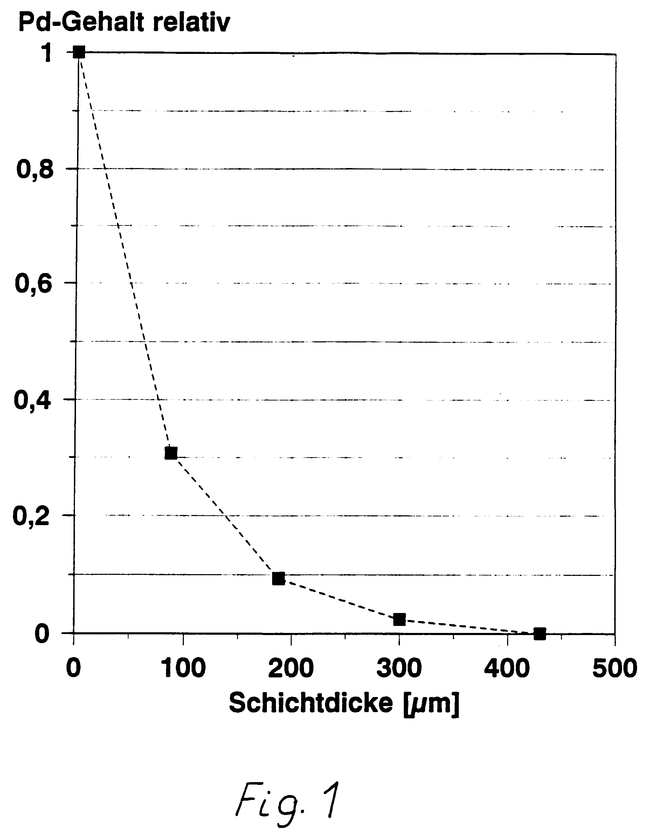

**Edelmetallverteilung.** Beim Katalysator nach Beispiel 2 wurde die Palladiumverteilung innerhalb eines Korns mit Hilfe der energiedispersiven Röntgenmikroanalyse bestimmt. Die Ergebnisse sind in Figur 1 dargestellt. Dabei wurde die Palladium-Konzentration an der Partikeloberfläche willkürlich auf 1 gesetzt und die Konzentration innerhalb des Katalysatorkorns relativ dazu bestimmt. Deutlich ist zu ersehen, daß die Palladium-Konzentration innerhalb einer Entfernung von 200 µm von der Oberfläche schon auf 10 % abgefallen ist.

### Beispiel 3:

**Herstellung des Katalysators**. In einem Paddelmischer mit einem Gesamtvolumen von etwa 20 l ließ man bei laufendem Mischer zu 5 000 g Aktivkohlegranulat Cecarbon GAC 30 (Siebfraktion 1,2 bis 3,0 mm) bei Raumtemperatur 3 595 g Pd-Lösung (Na₂PdCl₄, 100 g Pd) und 1 400 g dest. Wasser zulaufen. Dann wurde der Mischer gestoppt, der Inhalt abgelassen, mit 2 l dest. Wasser nachgespült und noch 1 l H₂O zugegeben, so daß die Kohle mit Flüssigkeit bedeckt war. Nach 1 Stunde wurde über eine Filternutsche abgesaugt. Man erhielt 6,5 l Filtrat mit einem pH-Wert von 4,5. Anschließend wurde fünfmal mit je 10 l Wasser gewaschen, so daß das Filtrat nur noch geringe Mengen an Chloridionen enthielt. Der Katalysator wurde bei 120°C getrocknet. In gleicher Weise wurden zwei weitere Chargen hergestellt, so daß insgesamt 15 kg Katalysator mit einem Gesamtvolumen von etwa 30 l zur Verfügung standen.

**Aktivierung.** Zur Aktivierung vor dem Einsatz wurden alle in den Beispielen hergestellte Katalysatoren reduziert. In einem Stickstoffstrom von 1 Nm³/h wurde innerhalb von 4 h auf 200°C aufgeheizt. Dann wurden 50 Nl/h Wasserstoff für 20 h bei 200°C dem Stickstoff zudosiert. Anschließend wurde die Temperatur für 2 h in reiner Wasserstoffatmosphäre gehalten, bevor der Katalysator zur Härtung eingesetzt wurde.

### Beispiel 4:

**Verwendung des Katalysators aus Beispiel 1**. Der nach Beispiel 1 hergestellte Katalysator wurde in einer Laborhärtungsapparatur getestet. Ein Schachtreaktor mit einem Katalysatorvolumen von 150 ml (Katalysatorfüllung 66,6 g) wurde im Gleichstrom mit flüssiger und gasförmiger Phase beaufschlagt. Alle Versuche fanden bei einem Wasserstoffdruck von 20 bar statt. Als Rohstoffe für die Härtung wurden destillierte und rohe Talgfettsäure eingesetzt. Dabei wurden Durchsatz, LHSV und Temperatur T in weiten Grenzen variiert. Einzelne Ergebnisse sind in Tabelle 1 aufgeführt. Es wird deutlich, daß der Katalysator schon bei tiefen Temperaturen sehr aktiv ist (150°C, LHSV = 1, Jodzahl JZ = 0,46) und bei hohen Temperaturen sehr stark belastet werden kann (200°C, LHSV = 3,2, JZ = 0,75). Unter allen Bedingungen ist der Katalysator hochselektiv, d. h. es finden keine unerwünschten Nebenreaktionen statt, die sich durch eine Abnahme der Säurezahl SZ bemerkbar machen würden.

**Tabelle 1**

| Härtungsergebnisse | | | | | |
|---|---|---|---|---|---|
| | **T °C** | **LHSV 1/h** | **JZ** | **SZ** | **Umsatz % d.Th.** |
| destillierte Talgfettsäure Jodzahl 54,2 | 200 | 1,07 | 0,11 | 202,3 | 99,8 |
| | 200 | 1,00 | 0,13 | 203,3 | 99,8 |
| | 200 | 2,00 | 0,22 | 204,0 | 99,6 |
| | 200 | 2,13 | 0,25 | 203,6 | 99,5 |
| | 201 | 3,20 | 0,75 | 203,6 | 98,6 |
| | 171 | 3,13 | 1,33 | 204,4 | 97,5 |
| | 170 | 2,00 | 0,59 | 203,5 | 98,9 |
| | 171 | 2,00 | 0,75 | 204,4 | 98,6 |
| | 170 | 1,00 | 0,28 | 204,7 | 99,5 |
| | 170 | 0,93 | 0,29 | 204,7 | 99,5 |
| | 151 | 1,00 | 0,46 | 204,2 | 99,2 |
| | 150 | 2,07 | 3,18 | 204,3 | 94,1 |
| rohe Talgfettsäure Jodzahl 55,4 | 171 | 1,07 | 5,34 | 185,9 | 90,4 |
| | 170 | 1,00 | 5,21 | 186,1 | 90,6 |
| | 200 | 1,00 | 2,26 | 186,9 | 95,3 |
| | 200 | 0,93 | 2,05 | 189,3 | 96,3 |
| | 220 | 0,93 | 0,90 | 190,3 | 98,4 |

### Beispiel 5:

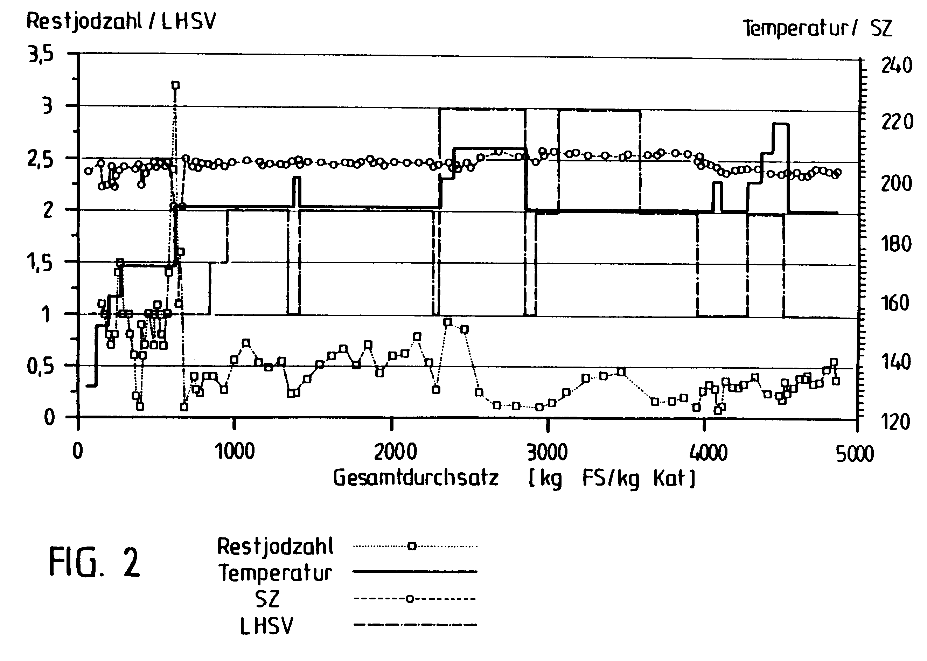

**Verwendung des Katalysators aus Beispiel 2.** Der nach Beispiel 2 hergestellte Katalysator wurde einem Standzeittest unterworfen. Dazu wurden 500 g entsprechend 1 l des Katalysators in einer Technikumsanlage über einen Zeitraum von 116 Tagen mit verschiedenen Fettsäuren, überwiegend destillierter Talgfettsäure unter hydrierenden Bedingungen getestet (Wasserstoffdruck 20 bar). Durchsatz und Temperatur wurden in weiten Grenzen variiert. Es zeigte sich, daß selbst nach dieser langen Zeit und einer Menge an Rohstoff, die 4 858 kg Produkt/kg Katalysator entspricht, die Aktivität des Katalysators noch nicht merklich nachgelassen hat (JZ unter 0,5 bei LHSV = 1 und einer Temperatur von 190°C). Ergebnisse über den gesamten Versuchszeitraum sind in Fig. 2 graphisch dargestellt. Jodzahl und LHSV bzw. Temperatur und Säurezahl sind jeweils an der gleichen Skala abzulesen. Der Anstieg der Jodzahl links im Diagramm ist auf den Einsatz von Rohfettsäure zurückzuführen.

### Beispiel 6:

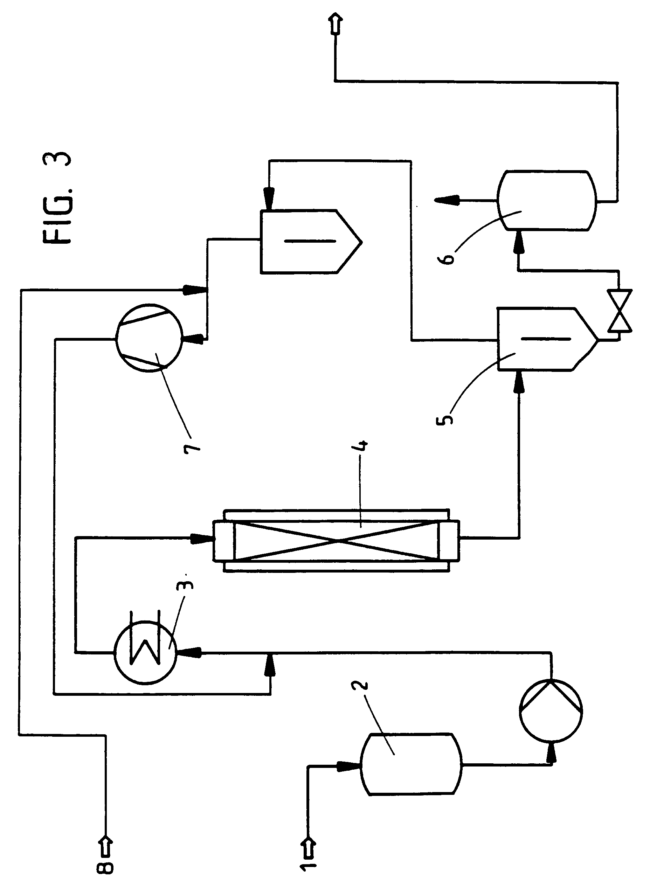

**Verwendung des Katalysators aus Beispiel 3.** Mit 13,2 kg des nach Beispiel 3 hergestellten Katalysators wurden Härtungsversuche im halbtechnischen Maßstab durchgeführt. Dabei handelt es sich um eine Kreisgasanlage, bei der der im Überschuß eingesetzte Wasserstoff vom Produkt abgetrennt und wieder rezirkuliert wird (Fig. 3).

Fettsäure 1 wird über eine Vorlage 2 und einen Erhitzer 3 zusammen mit dem Kreisgas in einen Reaktor 4 gepumpt. Das im Hochdruckabscheider 5 abgetrennte gehärtete Produkt sammelt sich in einer Vorlage 6. Vom Kreisgaskompressor 7 wird der überschüssige Wasserstoff sowie Frischwasserstoff 8 zum Erhitzer 3 zurückgeführt. Die Versuchsparameter sind in Tabelle 2 aufgeführt.

**Tabelle 2**

| Versuchsparameter | |
|---|---|
| Reaktortyp | Einzelrohr |
| Durchmesser | 63 mm |
| Länge Katabett | 8 000 mm |
| Volumen Katabett | 25 l |
| L/D | 127 : 1 |
| Druck | 20 bar |
| Kreisgasmenge | 1,4 - 1,8 Nm³ /l Kat * h |
| Durchsatz | 1 m³/m³ Kat * h |
| Flüssigkeitsbelastung | 8 m³/m² * h |
| Gasbelastung (190°C) | 950 - 1220 m³/m² * h |

Es wurden verschiedenen Fettsäurequalitäten getestet, insbesondere im Hinblick auf die Farbe der Produkte. Die Mittelwerte der Ergebnisse für die einzelnen Produkte sind in Tabelle 3 und 4 zusammengefaßt. Insbesondere aus Tabelle 4 wird deutlich, daß die Farbe der Produkte durch den Härtungsschritt deutlich verbessert wird.

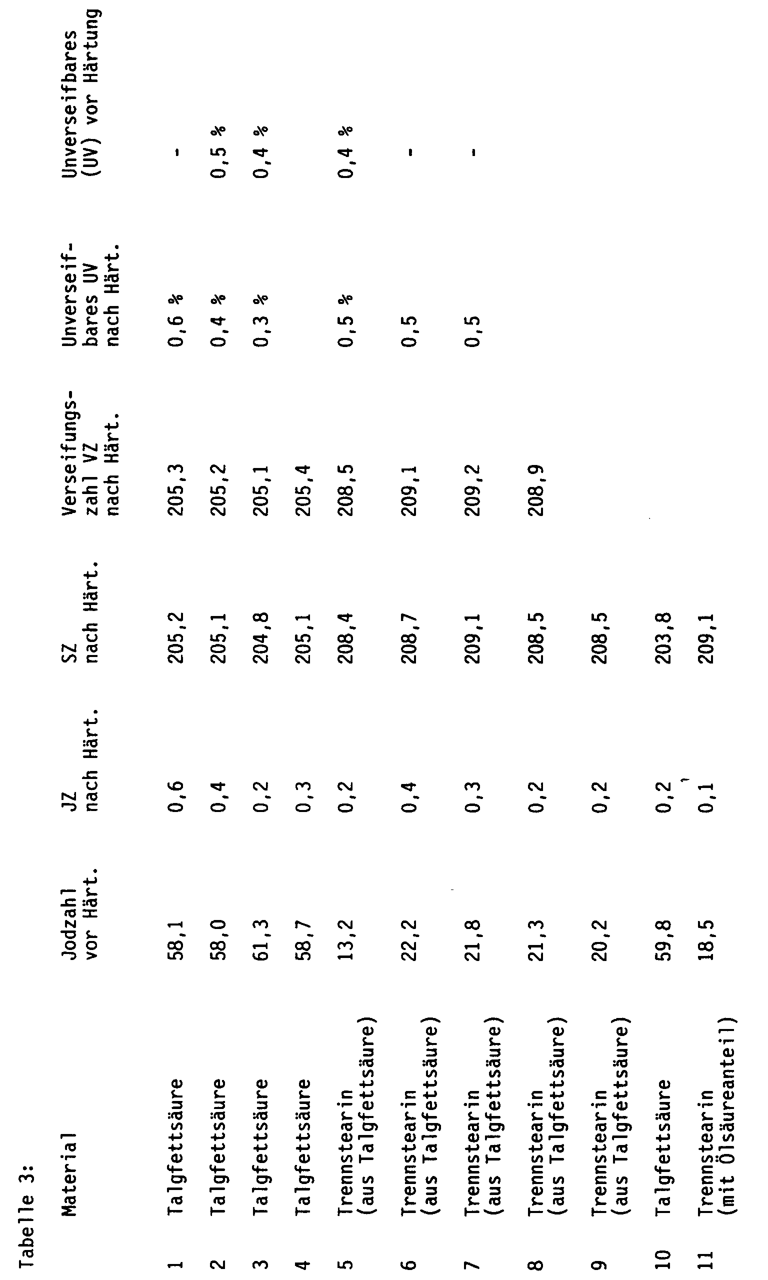

**Tabelle 4**

| Farbkennzahlen (Lovibond 5 1/4") | | | |
|---|---|---|---|
| **Material** | | **vor Härtung (Gelbwert/Rotwert)** | **nach Härtung (Gelbwert/Rotwert)** |
| 1 | Talgfettsäure | | 1,7/0,7 |
| 2 | Talgfettsäure | 13,0/2,0 | 1,6/0,6 |
| 3 | Talgfettsäure | 3,5/0,8 | 0,5/0,3 |
| 4 | Talgfettsäure | 2,4/0,6 | 0,1/0,1 |
| 5 | Trennstearin (aus Talgfettsäure) | 2,0/0,5 | 0,6/0,4 |
| 6 | Trennstearin (aus Talgfettsäure) | 7,7/1,4 | 2,8/1,0 |
| 7 | Trennstearin (aus Talgfettsäure) | 2,9/0,6 | 1,6/0,7 |
| 8 | Trennstearin (aus Talgfettsäure) | 7,7/1,5 | 1,8/0,8 |
| 9 | Trennstearin (aus Talgfettsäure) | 5,7/1,3 | 1,9/0,9 |
| 10 | Talgfettsäure | 2,4/0,5 | 0,7/0,3 |
| 11 | Trennstearin (mit Ölsäureanteil) | 1,7/0,4 | 0,8/0,5 |

### Beispiel 7:

**Herstellung des Katalysators.** 716,2 g Aktivkohleextrudat (Carbotech A35/2, 2 mm Extrudat, BET-Oberfläche 890 m²/g, Hg-Porenvolumen 0,74 ml/g, pH-Wert 8,7 (10 % in H₂O) wurden bei Raumtemperatur mit 514,7 g Pd-Salzlösung (14,32 g Pd als Na₂PdCl₄) und 200 g H₂O vermischt. Anschließend wurden noch 1 000 g Wasser zugegeben. Nach einer Stunde wurde über eine Saugfilternutsche abfiltriert und mit 17 l Wasser chloridarm gewaschen. Dann wurde bei 120°C über Nacht getrocknet. Ausbeute 717,5 g.

### Beispiel 8:

**Verwendung des Katalysators aus Beispiel 7**. 355 g (entsprechend 1l) des Katalysators aus Beispiel 7 wurden in einer Hydrierapparatur über einen Zeitraum von 18 Betriebstagen mit verschiedenen Rohstoffen auf Aktivität getestet. Nach der üblichen, oben beschriebenen Aktivierung wurde der Katalysator mit 171 l Talgmethylester (Me-Ti; JZ=50,2; SZ=0,80; VZ=199,5) und 218 l Talgfettsäure (Ti-FS; JZ=58,5; SZ= 206,3) beaufschlagt. Dabei wurden folgende Härtungsergebnisse gemäß Tabelle 5 erzielt:

**Tabelle 5**

| Härtungsergebnisse | | | | |
|---|---|---|---|---|
| **Rohstoff** | **Gesamtdurchsatz l** | **Temperatur Heizkreislauf °C** | **LHSV 1/h** | **JZ** |
| Me-Ti | 38 | 170 | 1 | 0,07 |
| | 86 | 170 | 1 | 0,06 |
| | 110 | 180 | 2 | 0,11 |
| | 123 | 180 | 2 | 0,11 |
| Ti-FS | 197 | 190 | 1 | 0,26 |
| | 256 | 190 | 1 | 0,21 |
| | 357 | 200 | 1 | 0,20 |
| | 389 | 200 | 1 | 0,22 |

### Beispiel 9:

**Herstellung des Katalysators.** 1 000 g Aktiv-Kohlegranulat CECARBON GAC 616G der Körnung 1,2 - 3,4 mm und einer Schüttdichte 0,51 kg/l (pH-Wert 7,8; BET-Oberfläche von 1 190 m²/g und Hg-Porenvolumen von 0,15 ml/g) wurden im Mischbehälter vorgelegt. 718,9 g Lösung von Na₂PdCl₄ (entsprechend 20,0 g Palladium) wurden mit 281 g H₂O vereinigt und in beschriebener Weise dem Kohleträger zugegeben. Anschließend wurde mit 667 g H₂O verdünnt, um gleiche Flüssigkeitsverhältnisse einzustellen. Nach 1 h Standzeit wurde wie üblich filtriert und chloridarm ausgewaschen. Der pH-Wert des Erstfiltrats betrug 3,5. Am Ende der Spülprozedur hatte das Waschwasser einen pH-Wert von 5,5 . Das feuchte Granulat wurde bei 120°C getrocknet.

### Beispiel 10:

**Verwendung des Katalysators aus Beispiel 9.** 520 g (entsprechend 1 000 ml) des nach Beispiel 9 hergestellten Katalysators wurden in einer 1,2 l-Hydrieranlage über einen Zeitraum von 36 Betriebstagen mit insgesamt 660 l Rohstoffen verschiedenster Art (Rinderspeisetalg: JZ 46,6; SZ=2,70, VZ= 195; Knochenfettsäure: JZ=60,6; SZ=205,7; Talgfettsäure: JZ=58,5, SZ= 206,3; Talgmethylester: JZ=48,9, SZ=0,40, VZ=195) getestet. Dabei wurden Härtungsergebnisse gemäß Tabelle 6 erzielt:

**Tabelle 6**

| Härtungsergebnisse | | | | |
|---|---|---|---|---|
| **Rohstoff** | **Ges. Durchsatz l** | **Temperatur °C** | **LHSV 1/h** | **JZ** |
| Rindertalg | 17 | 160 | 1 | 4,0 |
| | 33 | 200 | 1 | 1,1 |
| | 65 | 220 | 1 | 0,57 |
| | 106 | 220 | 0,5 | 0,13 |
| | 154 | 200 | 0,5 | 0,26 |
| | 173 | 200 | 0,5 | 0,42 |
| Knochenfettsäure | 189 | 200 | 1 | 0,07 |
| | 222 | 200 | 1 | 0,10 |
| Talgfettsäure | 278 | 200 | 1 | 0,31 |
| Talgmethylester | 394 | 200 | 1 | 0,10 |
| Talgfettsäure | 512 | 200 | 1 | 0,29 |
| Talgmethylester | 532 | 200 | 1 | 0,07 |
| | 660 | 190 | 1 | 0,12 |

### Beispiel 11:

**Herstellung des Katalysators (1 % Pd/C)**. 1 500 g Aktiv-Kohlegranulat CECARBON GAC 30 der Korngröße 1,3 - 3 mm und einer Schüttdichte 0,49 kg/l (pH-Wert: 8,3 (10 % in H₂O); BET-Oberfläche von 1 140 m²/g und Hg-Porenvolumen von 0,32 ml/g) wurden im Mischbehälter vorgelegt und mit einer Lösung von 539,2 g Na₂PdCl₄ (entsprechend 15,0 g Palladium) in 961 g H₂O, also 1 500 g Lösung, unter Umrühren rasch versetzt. Anschließend wurden noch 1 000 g H₂O zugegeben, um einen überstehenden Flüssigkeitsstand zu erreichen. Nach 1 h Standzeit wurde der imprägnierte Trägerkatalysator von der Salzlösung abfiltriert. Mit 30 l Waschwasser wurde der Katalysator chloridarm gespült, danach bei 120°C getrocknet und für Härtungsversuche eingesetzt.

### Beispiel 12:

**Verwendung des Katalysators aus Beispiel 11.** 495 g entsprechend 1 000 ml des in Beispiel 11 hergestellten Katalysators wurden in einer Hydrierapparatur über einen Zeitraum von 51 Betriebstagen mit insgesamt 1 500 l verschiedener Rohstoffe beaufschlagt:

| | | |
|---|---|---|
| Trennstearin | JZ=18,4 | SZ=209,0 |
| Talgfettsäure | JZ=57,4 | SZ=205,7 |
| Knochenfettsäure | JZ=60,6 | SZ=205,7 |
| Rübölfettsäure | JZ=115,8 | SZ=200,9 |

Bei der Härtung von Rübölfettsäure wurde bei unterschiedlichen Drükken und Temperaturen gehärtet, um gezielt bestimmte Jodzahlen einzustellen. Bei den anderen Rohstoffen wurde der Wasserstoffdruck wie üblich auf 20 bar konstant gehalten. Es wurden Härtungsergebnisse gemäß Tabelle 7 erzielt:

**Tabelle 7**

| Härtungsergebnisse | | | | | |
|---|---|---|---|---|---|
| **Rohstoff** | **Gesamtdurchsatz l** | **T °C** | **P bar** | **LHSV 1/h** | **JZ** |
| Trennstearin | 7 | 160 | 20,7 | 1 | 0,03 |
| | 49 | 160 | 20,8 | 2 | 0,67 |
| Talgfettsäure | 78 | 160 | 19,8 | 1 | 0,36 |
| | 123 | 180 | 20,0 | 1 | 0,46 |
| | 194 | 200 | 21,2 | 1 | 0,39 |
| | 276 | 200 | 19,9 | 1 | 0,17 |
| Knochenfettsäure | 434 | 210 | 20,1 | 2 | 0,19 |
| | 706 | 210 | 20,1 | 2 | 0,17 |
| | 892 | 210 | 20,4 | 2 | 0,20 |
| Rübölfettsäure | 938 | 80 | 20,4 | 2 | 83,6 |
| | 967 | 80 | 10,4 | 1 | 82,8 |
| | 991 | 90 | 5,6 | 1 | 81,1 |
| | 1087 | 90 | 5,5 | 1 | 82,0 |
| | 1111 | 100 | 4,8 | 1 | 67,5 |
| | 1135 | 105 | 5,3 | 1 | 57,9 |
| | 1159 | 110 | 5,3 | 1 | 49,6 |
| | 1183 | 110 | 5,2 | 1 | 49,5 |
| Knochenfettsäure | 1253 | 210 | 20,4 | 2 | 0,50 |
| | 1377 | 210 | 20,0 | 1 | 0,18 |
| | 1409 | 210 | 20,3 | 1 | 0,09 |
| Talgfettsäure | 1500 | 210 | 19,8 | 1 | 0,73 |

### Beispiel 13:

**Herstellung des Katalysators (0,5 % Pd/C).** 1 500 g Aktiv-Kohlegranulat GAC 30 der Körnung 1,3 - 3 mm (Schüttdichte 0,49 kg/l; pH-Wert 8,3; BET-Oberfläche 1 140 m²/g und Hg-Porenvolumen 0,32 ml/g) wurden im Mischbehälter vorgelegt. 269,6 g Pd-Salzlösung als Na₂PdCl₄ (entsprechend 7,5 g Pd) wurden mit 1 230 g H₂O vereinigt und mit dem Kohlegranulat vermischt. Mit 1 000 g H₂O wurde nachgespült. Wie in Beispiel 11 wurde chloridarm gespült und bei 120°C das feuchte Katalysatorgranulat getrocknet.

### Beispiel 14:

**Verwendung des Katalysators aus Beispiel 13**. 525 g entsprechend 1 000 ml des in Beispiel 13 hergestellten Katalysators wurden in einer Hydrierapparatur über einen Zeitraum von 17 Betriebstagen mit ingesamt 369 l Rohstoffen beaufschlagt. An Rohstoffen kamen zum Einsatz:

| | | |
|---|---|---|
| Talgfettsäure | JZ=58,5 | SZ=206,3 |
| Knochenfettsäure | JZ=60,6 | SZ=205,7 |

Dabei wurden Härtungsergebnisse gemäß Tabelle 8 erzielt:

**Tabelle 8**

| Hydrierergebnisse | | | | |
|---|---|---|---|---|
| **Rohstoff** | **Gesamtdurchsatz l** | **Temperatur °C** | **LHSV 1/h** | **JZ** |
| Talg-Fettsäure | 24 | 190 | 1 | 0,87 |
| | 48 | 210 | 1 | 0,41 |
| | 87 | 210 | 1 | 0,88 |
| | 169 | 220 | 1 | 0,59 |
| | 240 | 220 | 1 | 0,61 |
| Knochenfettsäure | 353 | 220 | 1 | 0,19 |
| | 389 | 220 | 1 | 0,13 |

### Beispiel 15:

**Herstellung des Katalysators.** 1 500 g Aktiv-Kohlegranulat (GAC 30 der Körnung 1,2 - 3,4 mm, Schüttdichte 0,51; pH-Wert 7,8; BET-Oberfläche 1 190 m²/g und Hg-Porenvolumen 0,15 ml/g) wurden im Mischbehälter vorgelegt. 1 078,4 g Pd-Salzlösung als Na₂PdCl₄ (entsprechend 30,0 g Palladium) wurden mit 421,6 g H₂O vereinigt und dem vorgelegten Kohlegranulat zugegeben.

Anschließend wurden 1 000 g H₂O hinzugefügt und das erhaltene Produkt nach Standzeit in oben beschriebener Weise aufgearbeitet. Das Erstfiltrat hatte einen pH-Wert von 2,8, das letzte Waschwasser 4,2.

### Beispiel 16:

**Härtungsversuche.** 527 g des nach Beispiel 15 hergestellten Katalysators (entsprechend 1 000 ml) wurden in einer Hydrierapparatur über einen Zeitraum von 55 Betriebstagen mit 1 172 l verschiedenen Rohstoffen beaufschlagt, nämlich:

| | | |
|---|---|---|
| Palmkernöl, raff. (PK) | JZ=17,4 | VZ=244 |
| Sonnenblumenöl (SB-Öl), neu | JZ=80,7 | VZ=189 |
| Rüböl, raff. | JZ=112,6 | VZ=192 |
| Trennstearin St20 | JZ=20 | SZ=208,6 |
| Talgfettsäure (TiFS) | JZ=50 | SZ=206,3 |

Zuerst wurden die drei Triglyceride eingesetzt. Davon wurden Sonnenblumenöl und Rüböl nur selektiv gehärtet, d. h. die Jodzahl wurde auf einen bestimmten mittleren Wert abgesenkt. Alle Versuche werden bei 20 bar Wasserstoffdruck durchgeführt. Die Ergebnisse sind in Tabelle 9 zusammengefaßt:

**Tabelle 9**

| Härtungsergebnisse | | | | |
|---|---|---|---|---|
| **Rohstoff** | **Gesamtdurchsatz l** | **T °C** | **LHSV 1/h** | **JZ** |
| PK-Öl | 54 | 180 | 1 | 0 28 |
| | 118 | 190 | 1 | 0,38 |
| | 166 | 190 | 1 | 0,57 |
| SB-Öl, neu | 182 | 190 | 1 | 7,3 |
| | 200 | 200 | 0,5 | 2,1 |
| | 216 | 150 | 1,0 | 27,3 |
| | 232 | 150 | 1,0 | 35,6 |
| | 304 | 135 | 1,0 | 56,1 |
| Rüböl, raff. | 337 | 135 | 1,0 | 83,4 |
| | 378 | 150 | 1,0 | 74,4 |
| | 402 | 165 | 1,0 | 65,8 |
| | 425 | 190 | 1,0 | 48,8 |
| | 519 | 130 | 0,5 | 6,5 |
| St20 | 549 | 200 | 1,0 | 0,1 |
| | 800 | 200 | 1,0 | 0,1 |
| TiFS | 845 | 200 | 1,0 | 0,1 |
| | 1084 | 200 | 1,0 | 0,1 |

### Beispiel 17:

**Herstellung des Katalysators (2 % Pd/C).** 716,2 g Aktiv-Kohle (2 mm-Extrudat Carbotech A35/2 mit einer Schüttdichte von 0,36 kg/l; einer BET-Oberfläche von 892 mm²/g und einem Hg-Porenvolumen von 0,74 ml/g) wurden in einem Mischbehälter vorgelegt und mit 514,7 g Lösung von Na₂PdCl₄ (entsprechend 14,3 g Palladium) sowie 200 g H₂O unter Rühren vermischt. Anschließend wurde mit 1 000 g H₂O versetzt und nach 1 h Standzeit in oben beschriebener Weise filtriert. Das Erstfiltrat hatte einen pH-Wert von 1,6, der am Ende der Auswaschung bei 3,05 lag. Der chloridarme, feuchte Katalysator wurde bei 120°C getrocknet und zur Aktivitätsermittlung in einer Hydrieranlage eingesetzt.

### Beispiel 18:

**Verwendung des Katalysators aus Beispiel 17.** 355 g (entsprechend 1 000 ml) des nach Beispiel 17 hergestellten Katalysators wurden in einer 1-l-Hydrierapparatur über eine Betriebsdauer von 18 Tagen mit insgesamt 389 l Rohstoff beaufschlagt, nämlich mit

| | | |
|---|---|---|
| Talgfettsäuremethylester | JZ=50,2 | VZ=199,5 |
| Talgfettsäure | JZ=50 | SZ=206,3 |

Dabei wurden die Ergebnisse gemäß Tabelle 10 erzielt:

**Tabelle 10**

| Härtungsergebnisse | | | | |
|---|---|---|---|---|
| **Rohstoff** | **Gesamtdurchsatz l** | **T °C** | **LHSV 1/h** | **JZ** |
| Talgfettsäuremethylester | 38 | 170 | 1 | 0,07 |
| | 86 | 170 | 1 | 0,06 |
| | 171 | 170 | 2 | 0,48 |
| Talgfettsäure | 197 | 190 | 1 | 0,26 |
| | 256 | 190 | 1 | 0,21 |
| | 328 | 200 | 1 | 0,14 |
| | 389 | 200 | 1 | 0,22 |

### Bezugszeichenliste

- 1: Fettsäure
- 2: Vorlage
- 3: Erhitzer
- 4: Reaktor
- 5: Hochdruckabscheider
- 6: Vorlage
- 7: Kreisgaskompressor
- 8: Frischwasserstoff

## Patentansprüche

1. Schalenkatalysator mit 0,3 bis 5 Gew.-% Palladium - bezogen auf den getrockneten Katalysator - auf einem alkalischen Aktivkohleträger, erhältlich durch Imprägnieren des Trägers mit einer wäßrigen Palladiumsalzlösung, Ausfällen von Palladium und Reduktion, **dadurch gekennzeichnet**, daß man in Abwesenheit eines Oxidationsmittels trockene, alkalisch reagierende Aktivkohle mit einem pH-Wert von mindestens 8 mit der Palladiumsalzlösung imprägniert und die überstehende Flüssigkeit abtrennt, nachdem diese einen pH-Wert von mindestens 1 erreicht hat.

2. Verfahren zur Herstellung eines Schalenkatalysators mit 0,3 bis 5 Gew.-% Palladium - bezogen auf den getrockneten Katalysator - auf einem alkalischen Aktivkohleträger, erhältlich durch Imprägnieren des Trägers mit einer wäßrigen Palladiumsalzlösung, Ausfällen von Palladium und Reduktion, **dadurch gekennzeichnet**, daß man in Abwesenheit eines Oxidationsmittels trockene, alkalisch reagierende Aktivkohle mit einem pH-Wert von mindestens 8 mit der Palladiumsalzlösung imprägniert und die überstehende Flüssigkeit abtrennt, nachdem diese einen pH-Wert von mindestens 1 erreicht hat.

3. Verwendung von Schalenkatalysatoren nach Anspruch 1 zum Härten von ungesättigten Fetten, Ölen, Fettsäureestern und anderen Fettderivaten durch katalytisches Hydrieren mit Wasserstoff.

## Claims

1. A shell catalyst containing 0.3 to 5% by weight of palladium, based on the dried catalyst, on an alkaline active carbon support obtainable by impregnation of the support with an aqueous palladium salt solution, precipitation of palladium and reduction, characterized in that dry active carbon showing an alkaline reaction with a pH value of at least 8 is impregnated with the palladium salt solution in the absence of an oxidizing agent and the supernatant liquid is separated off after it has reached a pH value of at least 1.

2. A process for the production of a shell catalyst containing 0.3 to 5% by weight of palladium, based on the dried catalyst, on an alkaline active carbon support obtainable by impregnation of the support with an aqueous palladium salt solution, precipitation of the palladium and reduction, characterized in that dry active carbon showing an alkaline reaction with a pH value of at least 8 is impregnated with the palladium salt solution in the absence of an oxidizing agent and the supernatant liquid is separated off after it has reached a pH value of at least 1.

3. The use of the shell catalysts claimed in claim 1 for the hydrogenation of unsaturated fats, oils, fatty acid esters and other fatty derivatives by catalytic hydrogenation with hydrogen.

## Revendications

1. Catalyseur en coquille ayant 0,3 à 5 % en poids de palladium par rapport au catalyseur séché, sur un support de charbon actif alcalin, qu'on peut obtenir par imprégnation du support avec une solution aqueuse de sel de palladium, précipitation de palladium et réduction, caractérisé en ce qu'on imprègne du charbon actif sec à réaction alcaline en l'absence d'oxydant ayant un pH d'au moins 8 avec la solution de sel de palladium et on sépare le liquide surnageant, dès que celui-ci a atteint un pH d'au moins 1.

2. Procédé de préparation d'un catalyseur en coquille ayant 0,3 à 5 % en poids de palladium, par rapport au catalyseur séché, sur un support de charbon actif alcalin, qu'on peut obtenir par imprégnation du support avec une solution aqueuse de sel de palladium, précipitation de palladium et réduction, caractérisé en ce qu'on imprègne du charbon actif sec à réaction alcaline en l'absence d'oxydant, ayant un pH d'au moins 8 avec la solution de sel de palladium et on sépare le liquide surnageant dès que celui-ci a atteint un pH d'au moins 1.

3. Utilisation de catalyseur en coquille selon la revendication 1 pour durcir des graisses, huiles, esters d'acides gras insaturés et autres dérivés gras insaturés par hydrogénation catalytique par l'hydrogène.
